(19) Europäisches Patentamt
European Patent Office
Office européen des brevets

(11) **EP 3 427 482 B1**

(12) # EUROPEAN PATENT SPECIFICATION

(45) Date of publication and mention
of the grant of the patent:
**07.06.2023 Bulletin 2023/23**

(21) Application number: **17715964.7**

(22) Date of filing: **03.03.2017**

(51) International Patent Classification (IPC):
*H04N 21/25* (2011.01)  *H04N 21/258* (2011.01)
*H04N 21/442* (2011.01)  *H04N 21/466* (2011.01)

(52) Cooperative Patent Classification (CPC):
**H04N 21/4668; H04N 21/252; H04N 21/25891;
H04N 21/44222; H04N 21/4662**

(86) International application number:
**PCT/GB2017/050573**

(87) International publication number:
**WO 2017/153721 (14.09.2017 Gazette 2017/37)**

(54) **MEDIA CONTENT RECOMMENDATION**

MEDIENINHALTSEMPFEHLUNG

RECOMMANDATION DE CONTENU MULTIMÉDIA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.03.2016 GB 201603990**

(43) Date of publication of application:
**16.01.2019 Bulletin 2019/03**

(73) Proprietor: **Sky CP Limited
Isleworth, Middlesex TW7 5QD (GB)**

(72) Inventors:
• **WALKER, Stuart
Isleworth
Middlesex TW7 5QD (GB)**

• **GAGNET, Julien
Isleworth
Middlesex TW7 5QD (GB)**

(74) Representative: **Cross, James Peter Archibald et
al
Maucher Jenkins
Seventh Floor Offices
Artillery House
11-19 Artillery Row
London SW1P 1RT (GB)**

(56) References cited:
**EP-A2- 1 775 949      WO-A1-03/024108
WO-A1-03/073375      WO-A1-2012/056463
WO-A1-2014/159467      WO-A2-03/090466
GB-A- 2 438 645      US-A1- 2004 003 403
US-A1- 2009 222 430**

## Description

### Field of the Invention

The present invention relates to a media content recommendation method and apparatus.

### Background of the Invention

Media broadcast or presentation systems typically require a user interface to allow a viewer to select media content, such as an audio-visual programme, to be displayed or recorded. In the case of a broadcast system, the user interface may be an electronic programme guide (EPG), which displays programmes that are available currently or in future by broadcast time and channel.

Video-on-demand media content items do not have a specific broadcast time or channel unless used in a catch-up service to refer to a previous broadcast. Instead, the available content is typically displayed by category, such as genre, most popular, newly added and so on. However, users may find such interfaces difficult to navigate, as there may be a large number of items in any particular category, and the categories may not be of interest. Instead, a recommendation engine may be used to compare the user's known preferences with the available content, and present for selection those items which most closely match the user's preferences.

The recommendation engine may be located centrally, for example at the head end of a broadcast system or a server of a video on demand system. In a centralised recommendation engine, the preferences of each active user of the system may be compared with each item of available content, to achieve a set of personalised recommendations for each user. However, such a centralised approach is not highly scalable, in that the processing required increases with the product of the number of available items and the number of active users.

GB 2 438 645 A relates to a system for content item recommendation. WO 2014/159467 A1 relates to a method and system for displaying recommended content such as movies associated with a cluster. US 2009/222430 A1 relates to an apparatus and method for content recommendation. US 2004/0003403 A1 relates to methods and systems for reducing information in electronic program guide and program recommendation systems.

### Statement of the Invention

According to one aspect of the present invention, there is provided a method according to claim 1. Other aspects of the present invention include a computer program product and system or apparatus for performing the method.

### Brief Description of the Drawings

There now follows, by way of example only, a detailed description of embodiments of the present invention, with reference to the figures identified below.

Figure 1 is a schematic diagram of the main components of a recommendation system in an embodiment of the present invention.
Figure 2 is a diagram illustrating the recommendation system model in an embodiment.
Figure 3 is a diagram illustrating how an affinity value may be derived from Taste and Flavour tokens.
Figure 4 is a flowchart of the operation of the recommendation system in an embodiment of the invention.
Figure 5 is a diagram illustrating clustering of media content items based on a single value content metadata tag.
Figure 6 is a diagram illustrating consolidation of the clusters of Figure 5.
Figure 7 is a diagram illustrating clustering of media content items based on a multiple value content metadata tag.
Figure 8 is a diagram illustrating consolidation of the clusters of Figure 7.
Figure 9 is a diagram illustrating clustering of users based on consumption data.
Figure 10 is a diagram of a media client for use in embodiments of the invention.
Figure 11 is a diagram of a computer system for use in embodiments of the invention.

### Detailed Description of the Embodiments

### System Overview

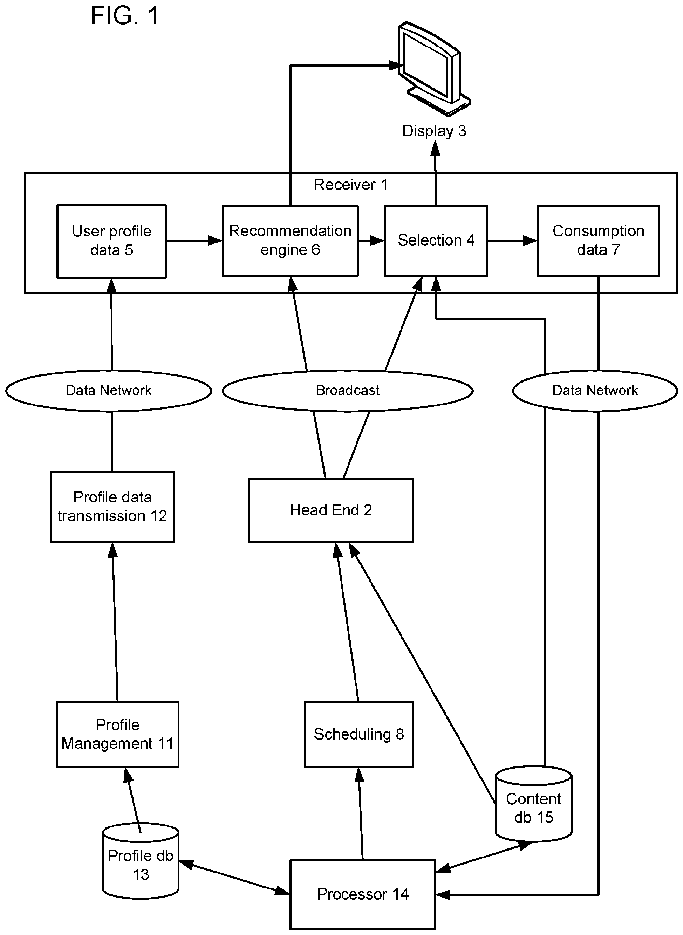

Figure 1 shows schematically the main components of a recommendation system in an embodiment of the present invention. This embodiment includes both broadcast video, via a broadcast channel, and video-on-demand (VOD), via a data network such as the Internet, to a receiver 1 such as a set-top box. However, aspects of this embodiment may be applied to broadcast-only or VOD-only systems. Hence, the receiver 1 is just one example of a media client which may be used in the present invention; other examples include personal media players, tablet or desktop computers, Internet TV devices and the like.

The receiver 1 is arranged to receive broadcast channels from a head end 2 over a broadcast link, and to output at least one of the received broadcast channels to a display 3. The receiver 1 stores profile data 5 identifying preferences and/or demographics of one or more users or users associated with the receiver 1. The profile data 5 may be obtained from a profile database 13 remote from the receiver 1 (e.g. at the head end 2 or a separate back end function) which stores the profile data for substantially all the users of the system. The profile data may be selected by a profile management function 11 and sent to a profile data transmission function 12, which transmits selected profile data 5 to the receiver 1, for example over a data network such as the Internet.

A scheduling function 8 determines a programme broadcast schedule and sends this to head end 2, from which broadcast schedule information is broadcast to the receiver 1. The broadcast schedule information includes metadata relating to individual media content items within the broadcast schedule. The broadcast schedule information is made available to a recommendation engine 6 at the receiver 1. The head end 2 also broadcasts media content items at the times and in the channels determined by the programme broadcast schedule. These media content items may be obtained from a content database 15 or a content delivery network (CDN), or may simply be made available on recorded media at the head end 2.

The content database 15 may also be accessible for delivery of VOD media content items to the receiver 1, for example over the data network. Information about the media content items available for VOD delivery is made available to the recommendation engine 6, including metadata relating to individual media content items.

The recommendation engine 6 presents to the user, for example on the display 3, recommended media content items from the programme broadcast schedule and/or available VOD media content items, based on the profile data 5 and metadata relating to the individual media content items. The user then selects one or more recommended media content items, via a programme selection function 4 (e.g. a user interface including a remote control). The selected media content item(s) are then output to the display 3 and/or recorded for later viewing. If a selected media content item is to be broadcast at a future time, schedule data relating to the media content item may be added to a recording list so that the media content item may be recorded at the time and from the channel indicated by the schedule data. If the selected media content item is currently being broadcast, the receiver 1 may tune to the corresponding broadcast channel and output the live broadcast to the display 3. If the selected media content item is available on VOD, the media content item may be downloaded over the data network and recorded and/or output to the display 3.

Consumption data 7 is recorded at the receiver 1 indicating consumption (e.g. viewing and/or recording) of media content items by the user(s) of the receiver 1. This consumption data may be sent over the data network to a processor 14 for use as described below.

## Recommendation System

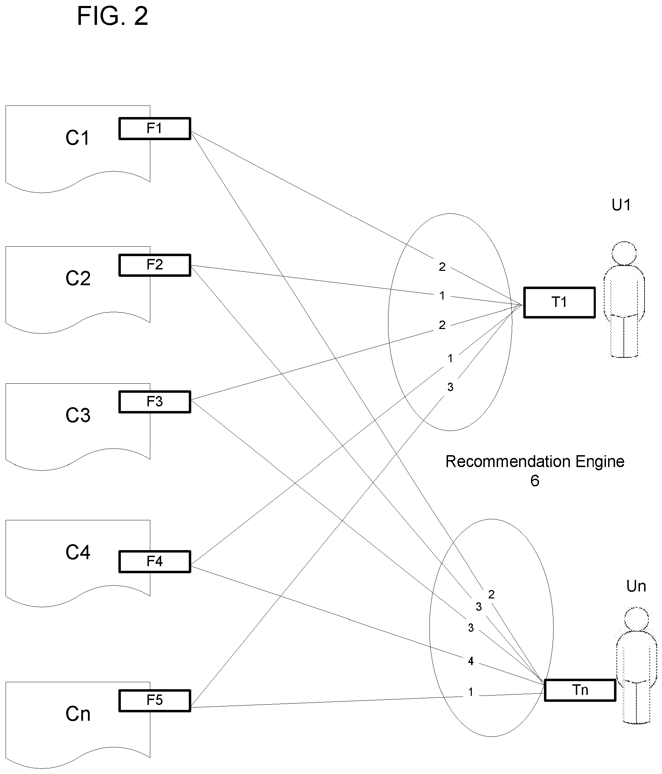

Figure 2 is a schematic diagram of a recommendation system model in an embodiment of the invention, in which personalisation can be applied by different elements within the architecture (such as in the content metadata or in the receiver 1 itself) in order to meet the scalability required to deliver a highly personalised user experience across a very large set of concurrently connected devices. The model is based upon the creation of a respective 'Flavour' token $F_n$ corresponding to each item of content $C_n$ and a respective 'Taste' token $T_n$ corresponding to each user $U_n$, representing the user's affinity to any given 'Flavour' token $F_n$.

The model proposed is based around splitting the analysis of the data (for example performing collaborative filtering) from its subsequent consumption to provide recommendations and other personalisations. Many recommendation engines internally operate in this manner with periodic analysis of data (e.g. daily) used to calculate recommendations, which are then exposed via an API (application programming interface). The difference from that model to the one proposed in this embodiment, enabling it to operate at scale, is to distil the analysis down to two sets of information (tokens) which can subsequently be combined to provide an indication of the affinity a user $U_1... U_n$ has with a media content item $C_1... C_n$. The token $F_1...F_n$ associated with an item of content $C_1...C_n$, termed 'Flavour' herein, can be included with the content metadata associated with that media content item $C_1...C_n$. The token $T_1... T_n$ associated with a user $U_1... U_n$, termed Taste, can be provided with the user profile data 5.

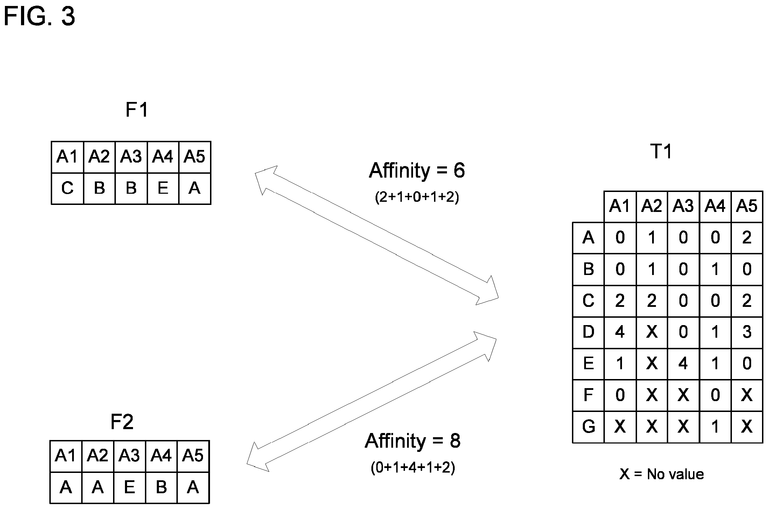

A simple example of how affinity could be derived from Taste and Flavour tokens is shown in Figure 3. In this model each Flavour token $F_1...F_n$ has five attributes $A_1...A_5$ with an associated attribute value for each for any given media content item (in the example below the Flavour token $F_1$ has a value of C for the attribute $A_1$ and Flavour token $F_2$ a value of A). The Taste token $T_1$ expresses an affinity value for the user $U_1$ to any given value of any Flavour attribute $A_1...A_5$, and combining these gives an overall affinity value. Different Flavour attributes $A_1... A_5$ may have a different number of possible values; in the example below the attribute $A_2$ has three possible values (A, B, C) whereas the attribute $A_4$ has seven possible values (A - G).

In the example of Figure 3, the taste token comprises a matrix of affinity values (e.g. integers in the range 0 to 9) for each of the attribute values of each of the Flavour attributes A1...A5. For each attribute of the Flavour token, the corresponding value is used to look up the corresponding affinity in the matrix of the taste token. The affinities for each attribute are added together to derive an overall affinity between the Flavour token and the Taste token. For example, for Flavour token F1, the value for attribute A1 is C, which indicates an affinity of 2 in the column for attribute A1 matrix of the Taste token T1. The affinities for each of the attributes A1... A5 are 2, 1, 0, 1 and 2, which are added to give a total affinity of 6. For Flavour token F2, the corresponding affinities are 0, 1, 4, 1 and 2, giving a total affinity of 8. Hence, media content item C2 will be more highly recommended to user U1 than media content item C1.

The example shown in Figure 3 is somewhat simplified in that the Flavour tokens F1, F2 have a single value for each attribute A1... A5 whereas in some cases the attributes may have multiple values, as described in the 'Multi Value Metadata Tags' section below.

## Recommendation Method

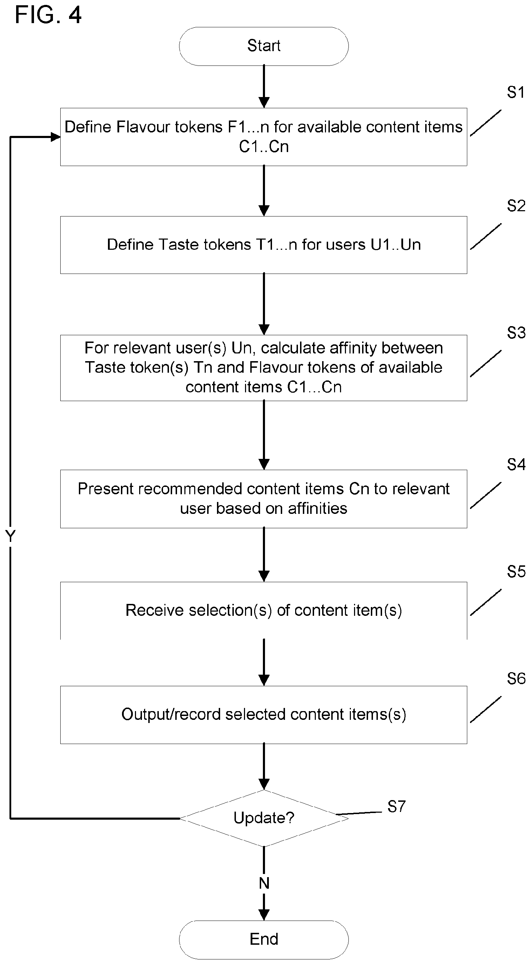

Figure 4 shows an example of a method of implementation of the recommendation system. Examples are given of which entity may perform a particular step, but this is purely by way of example and other architectures may be used within the scope of the invention.

At step S1, Flavour tokens F1...Fn are defined for each of the available media content items C1 ... Cn. This may be performed by a back-end process such as processor 14, based on content metadata obtained from the content database 15, consumption data obtained from the different users, and profile data from the profile database 13. The Flavour tokens F1...Fn may be provided as metadata for the individual media content items C1...Cn.

At step S2, Taste tokens T1... Tn are defined for the respective users U1... Un. Again, this may be performed by the processor 14, or another back-end function. The Taste tokens may be delivered to the user's devices, such as receiver 1, through the profile management system 11.

At step S3, the affinity between the Taste token(s) Tn of a relevant user or users and the Flavour tokens F1...Fn of available media content items C1...Cn are calculated. This step may be performed at the recommendation engine 6 on the user's local device, such as receiver 1. In this case, the relevant user(s) may be the user(s) of the local device. The available media content items C1...Cn may be the media content items available to the local device, for example in the broadcast schedule or list of available VOD items. Hence, only a relatively small number of affinities need to be calculated by the local recommendation engine 6.

At step S4, the local device presents recommended media content items to the user, based on the calculated affinities. These media content items may be presented on the display 3 in any convenient way, for example as a 'Recommended' list, or as highlighting on an EPG or a list of available media content items.

At step S5, the user may select one or more of the recommended media content items for viewing and/or recording at step S6, for example using a remote control or touchscreen.

Alternatively, or additionally to steps S5 and S6, the local device may download and/or record the recommended media content items automatically, without presenting these to the user for selection e.g. as push-VOD content. The user may later select any of these items for viewing at step S6, from a list of recorded media content items. More generally, the affinities of the available media content items C1...Cn to the user's Taste token Tn may be used to personalise the user interface of the local device. For example, the user interface may be themed according to the media content items Cn having the highest affinities, using e.g. stills or other content from those media content items.

At step S7, it may be determined whether an update is required to the Flavour and/or Taste tokens, for example as described below (this may be determined by the back end process as described above). If so, the process may repeat from step S1.

## Token Definition

This section describes one example of how Flavour tokens F1...Fn and Taste tokens T1... Tn may be defined. Alternative examples may be envisaged within the scope of the invention.

## Content Flavour

The Flavour token F1...Fn that is associated with an item of content C1 ... Cn comprises a number of attributes A1...A5. At least some of the attributes have a value or values which generally represents how the media content items C1...Cn have been clustered.

In a specific embodiment, there may be five attributes A1...A5. Two attributes A1, A2 are bound by content metadata values as described below, two attributes A3, A4 are derived from content consumption and one attribute A5 may be manually assigned. Possible mechanisms for deriving values for these attributes A1... A5 are explained below.

**Metadata bound attributes**

Some Flavour attributes are constrained by content metadata values, which effectively allows the attribute value to be derived from the existing content metadata. This is important for newly added media content items for which no consumption data yet exists. Candidate metadata tags that could be employed for this may include Genre, Studio, Year of Release, Actor and Director.

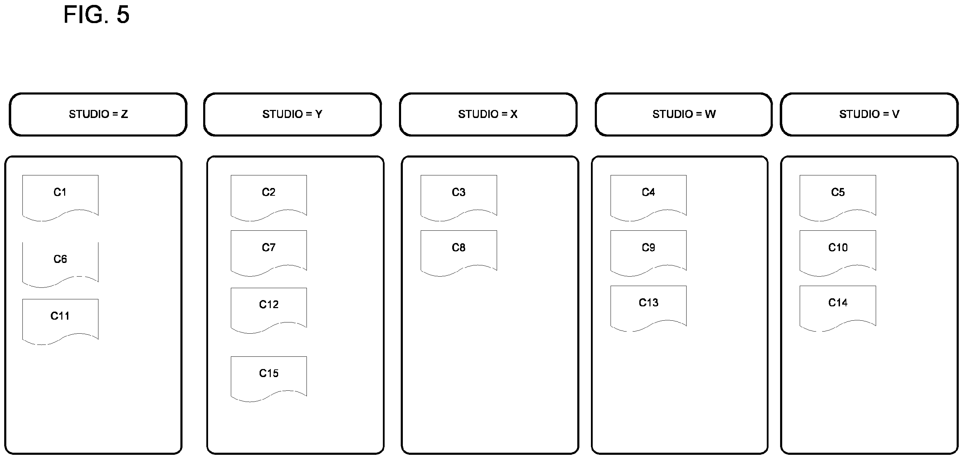

In one case, the media content items C1...Cn may be simply pooled or clustered based on the value of a content metadata tag, as shown in Figure 5 in which media content items C1... Cn are pooled (i.e. grouped together) based upon studio.

For many metadata attributes, creating a pool for each possible metadata value would result in an impractical (and probably statistically less useful) number of content Flavour attribute values A1...An if a value is assigned for each such pool. Mechanisms may therefore be employed to reduce the number of pools to a reasonable quantity (for example approximately 10-20).

**Small Pools**

The most expedient manner to deal with very small pools may be to simply discard them and either not assign a value for the Flavour attribute A1... An for the media content items C1... Cn (in which case the affinity evaluation for the attribute would be neutral) or to group them into an 'other' category.

**Merging Pools**

Pools may be evaluated for similarity and pools that are shown to be 'close' may be merged. Evaluation may be made on consumption data (for example, similarity of media content items C1...Cn is related to the number of common user views of the content). A suitable approach may be to determine the Silhouette Coefficient between the pools and merge pools that are shown to have little distinction (none of the pools showing much distinction would be an indicator that the metadata tag used to generate the pools probably is unsuitable and another should be employed).

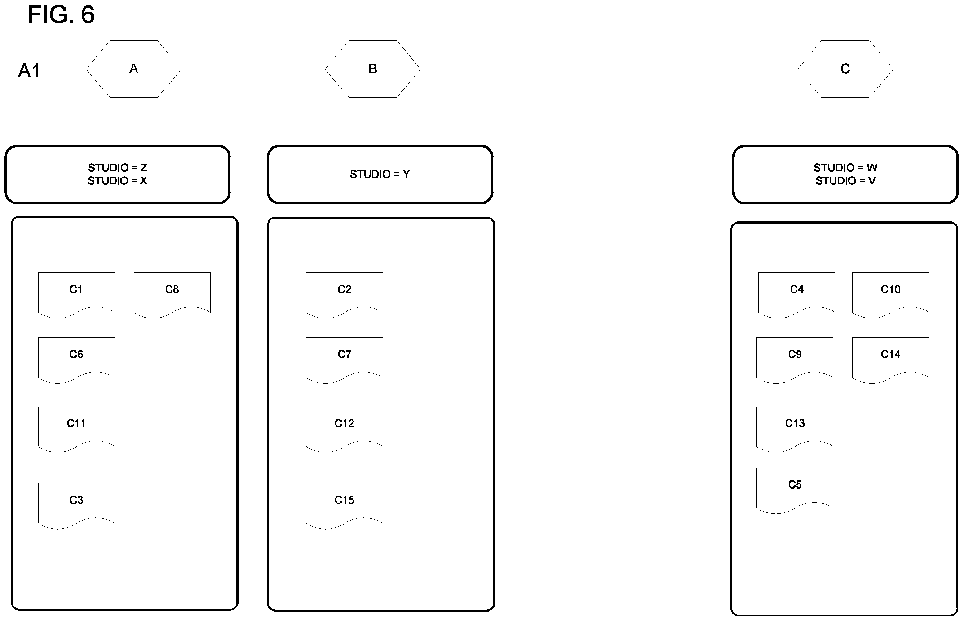

Figure 6 shows the consolidation of pools (pools Z and X and W and V have been merged based on evaluation of consumption data). The consolidated pools form the basis of the Flavour attribute A1. Media content items C1, C6, C11, C3, C8 have a Studio attribute A1 value of A, items C2, C7, C12, C15 a value of B and items C4, C5, C9, C10, C13 and C14 a value of C. A new media content item with a Studio metadata tag value of V would gain an A1 attribute value of C.

**Multi Value Metadata Tags**

Some metadata tags (such as Actor) can have multiple values for a single media content item C1... Cn. The handling of such metadata tags varies slightly from those that have a single value. First, a predetermined threshold N is defined such that the tag value would only be considered if it is associated with 'N' media content items (for example a tag value indicating a particular actor would only be considered if that actor appears in at least N of the media content items C1... Cn under consideration).

Secondly, only the first M values would be considered for any item of content (e.g. the top billed Actors). M may be a predetermined small integer (e.g. 3-5).

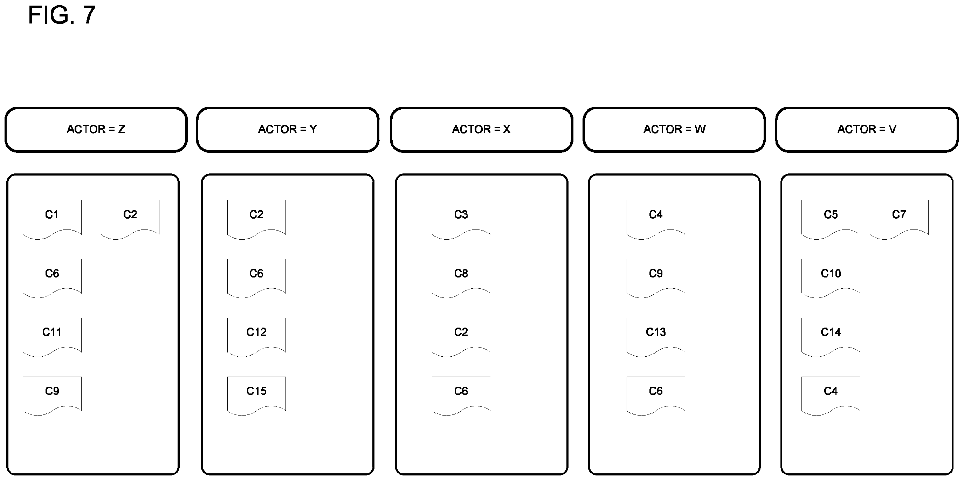

Figure 7 shows the pooling of content based on a multi-value metadata tag; since media content items can have multiple values for a metadata tag it can appear in multiple pools (for example media content item C2 appears in the pools associated with both actor Z and Y).

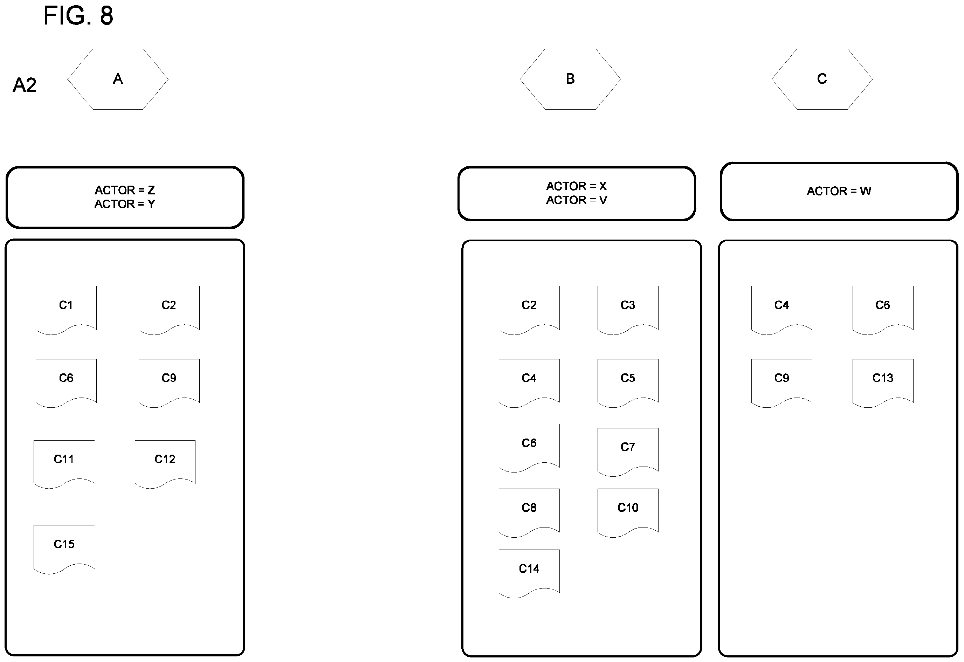

As with the single value metadata tag pools, the multi-value tag pools may be consolidated in a similar manner, such as using a Silhouette Coefficient (media content items common to two pools may be omitted from the computation of the Silhouette Coefficient between them). This is shown in Figure 8 in which the pools for Actor Z and Y and Actor X and V have been consolidated into a single pool. This now adds a further complication (to content appearing in multiple pools) that content can appear in the same pool twice.

In the example shown the Flavour attribute A2 for media content item C6 would have the values of A, B and C and that for media content item C2 would have A and B. Consideration for handling multiple Flavour attribute values is described below with reference to the Taste token T1...Tn.

**Consumption Attributes**

Flavour attributes A3, A4 may be assigned based purely on the consumption of the content by the corresponding user(s). One method for assigning a consumption attribute is to cluster media content items C1...Cn based upon their consumption. The distance between two media content items can be expressed as the inverse of the number of common user views (i.e. the number of users that have viewed both items of content). Standard data analysis techniques (e.g. *k*-means clustering) may be employed to cluster the media content items C1... Cn by common user views.

Another approach to deriving Flavour attributes for media content items is to first cluster the users based on similar consumption of media content items, and then determine which user cluster any given media content item C1... Cn is closest to.

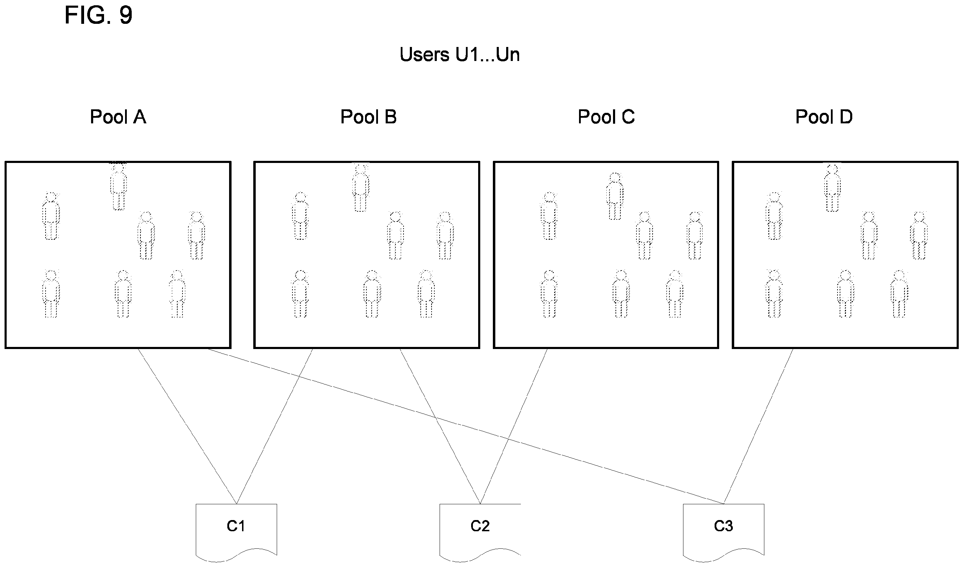

In Figure 9, the users U1...Un have been clustered into a (relatively small) number of pools (e.g. Pools A-D as shown), for example using a *k*-means clustering algorithm on the consumption data 7. The media content items C1..Cn are then analysed and associated with two pools of users based upon the highest and second highest number of users within the pool that have viewed that media content item (represented by the solid and dashed lines respectively in Figure 9).

In the example above, media content item C1 has a Flavour attribute A3 value of A (because pool A has the highest number of users who have viewed C1) and Flavour attribute A4 value ofB (pool B has the second highest numbers of users who have viewed C1).

## Manual Attributes

The Manual Flavour attribute A5 allows for the affinity evaluation to be influenced based upon a manual decision by a system operator. This can be used for a variety of content promotional purposes controlled by the system operator. An example of this is described below.

The user Taste token T1... Tn is described in the following section. For the purposes of this embodiment it is assumed that the 'affinity' value computed for the non-manual Flavour Attributes A1-A4 are in the range 0 - 9 (with zero representing no affinity and 9 representing a very high affinity). The affinity of the Manual Attribute within the User Taste token T1...Tn may take the fixed value shown in Table 1 below.

**Table 1**

| Attribute A5 Value | Affinity |
|---|---|
| A | 0 |
| 8 | 1 |
| C | 5 |
| D | 9 |
| E | 50 |

Media content items C1...Cn may by default be given a Manual Flavour attribute (A5) value of A, meaning the attribute would have no effect on the overall affinity as it always evaluates to an affinity of zero. The higher attribute values indicate increasing influence, so a media content item given a Manual Flavour attribute value of B has a slightly higher affinity (evaluates to 1) than a media content item with a value of A, up to a value of E which evaluates to an affinity so high that it would outweigh all other Flavour attributes.

In an alternative embodiment, different users U1...Un may have different Manual attribute (A5) affinity values in their Taste token T1... Tn, allowing for the promoting of content to sub-sets of users.

## User Taste Token

The Taste token T1... Tn associated with a user represents their affinity to the Flavour token F1...Fn of any given media content item C1...Cn. In order to do this, an affinity value is computed for each value of each Flavour attribute A1...A5. The affinity value for any given media content item Flavour attribute is computed as

$$\text{Affinity Value} = ((Dv * Dvf) + (IDv * IDvf)) / Ps$$

where

$Dv$ = Direct Views, the number of media content items within the content pool associated with attribute value that the user has viewed.

*Dvf* = Direct View weighting factor. Different Flavour Attributes could have different weighting factors if some Attributes are more significant than others.

*IDv* = Indirect Views. For any given user Un there is computed a number of near neighbours (users with the highest number of common views with the given user). This is the number of media content items within the pool associated with the attribute values that the user's near neighbours have viewed.

*IDvf* = Indirect View weighting factor (assumed to be less than *Dvf*).

*Ps* = Pool size (number of media content items in the pool).

The weighting factor may also be a function of time of viewing, such that recent views are more relevant than less recent ones.

## Evaluating Affinity to Content Flavour

The overall affinity of a user Un to a media content item C1... Cn is computed by adding the Affinity Value from the user's Taste token Tn for the Flavour Attribute Value A1...A5, as described above with reference to Figure 3. In cases where a Flavour Attribute has multiple values (for example the Actor-based attribute A2) then it is assumed that the highest Affinity Value for any of the Flavour attribute values is used. Where a media content item has no value for a Flavour attribute then an average value may be assumed.

## New Users

New users have no consumption data 7 from which to determine a Taste token Tn. Therefore, new users may be assigned a default Taste token Tn, for example based on average values across all users, until sufficient consumption data 7 is available.

## Multi-User Devices

Devices that are used by multiple users (for example receiver 1) may require multiple respective Taste tokens Tn corresponding to each user of the device. Individual users of the device may be identified explicitly (for example by requiring a user to log on to the device, or by biometric identification), or may be implied from viewing patterns. For example, multiple user profiles may be defined for a particular device corresponding to a time of day or day of week, and each user profile is identified as corresponding to a user.

## Token Versioning

It may be desirable to periodically refresh the media content item pooling (and where relevant, the metadata tag value mapping). When this occurs, then effectively all of the Flavour tokens F1...Fn and Taste tokens T1... Tn need to be refreshed. In order to avoid mismatches (e.g. using an old Taste token Tn against a remapped Flavour token Fn) in a distributed and highly cached environment then a 'generation version' identifier may be included to the Flavour tokens F1...Fn and Taste tokens T1...Tn allowing the recommendation engine 6 to identify version mismatches and request the current version of a token.

## Receiver

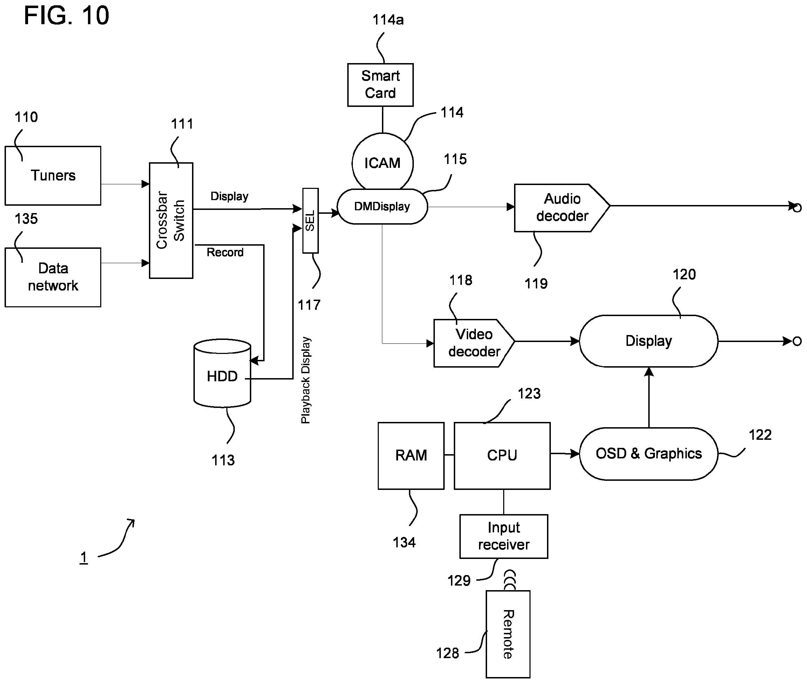

Figure 10 shows schematically the components of the receiver 1 for use in specific embodiments of the invention. In this example, received broadcast signals are input to tuners 110 tuneable into the same or different channels of the broadcast network for simultaneous reception of the same or different television programmes and/or media items. Signals from the tuners 110 are passed to a crossbar switch 111 which separates the data received from the tuners 110 into data for direct output to a display, data representing received television programmes for recording and subsequent playback, and user services and programme scheduling data, in accordance with the XSI standard, for example. The receiver 1 has a hard disk (or other storage medium) 113 which receives from the crossbar switch 111 compressed video and/or audio data for recording and subsequent playback

The received signals comprise digitally encoded data. In this example, the data is compressed using the Digital Video Broadcast/Moving Pictures Expert Group 2 or 4 (DVB/MPEG 2/4) or H.264 standard which permits both programme data and additional data (for example metadata and/or schedule data) to be transmitted in a single channel. The hard disk 113 receives and stores compressed data. The data is decompressed only after retrieval from the hard disk 113.

Satellite (and indeed cable) programmes are usually scrambled to restrict access to authorised users e.g. subscribers. The receiver 1 therefore has an Integrated Conditional Access Module (ICAM) 114 which co-operates with a smart card 114a to determine whether the viewer has subscribed to a particular channel and is therefore authorised to access the channel. Parental control over channel access is also provided, at least in part, by the ICAM 114. The receiver 1 further comprises a demultiplexing and descrambling circuit 115 which receives from a selector 117 data from the crossbar switch 111 for direct output or data from the hard disk 113 for playback. The demultiplexing and descrambling circuit 115 separates the data into video data and audio data for distribution to various locations within the receiver 1. The demultiplexing and descrambling circuit 115 is also controlled by the ICAM 114 to enable the descrambling of the signal by authorised users. The receiver 1 also comprises a video decoder 118 for decompression and processing of encoded video data received from the demultiplexing and descrambling circuit 115, and an audio decoder 119 for decompression and processing of compressed audio data, operating according to the MPEG 2/4 standard, for example.

Decompressed video data is supplied to display circuitry 120 combines the decompressed video data with on-screen display and graphics generated by on-screen display and graphics generation circuitry 122 using the user services and programme scheduling data, and outputs the combined video data to the display 3, for example over an HDMI interface.

The receiver 1 is controlled by a processor 123 which communicates with the various units of the receiver via a bus (not shown). The processor 123 has associated with it Random Access Memory (RAM) 134. The processor 123 controls operation of the receiver 1 by tuning the tuners 110 to receive signals for the desired channels so that the desired programme and/or interactive service data is displayed on the screen of the display 3, and by controlling the hard disk 113 to record desired television programmes or to play back previously recorded television programmes. Viewer selection of desired programmes and customer services is controlled by viewer manipulation of a remote control unit 128, which in response to such viewer manipulation transmits control signals to an input receiver 129 for input to the processor 123. The remote control unit 128 also allows the viewer to control of the operation of the hard disk 113 to record television programmes, to play back recorded television programmes and to program the recording of television programmes, etc.

Operation of the receiver 1 is controlled by software that makes the processor 123 responsive to control signals from the remote control unit 128 and/or additional data in the received signals.

The receiver 1 also includes an external data network interface 135, such as a wired or wireless network interface, or a telephony interface with modem, enabling a bidirectional data connection to a network, such as a local area network (LAN), wide-area network (WAN) or the Internet. This interface allows media content, such as Video-on-Demand (VOD) content to be downloaded to the receiver 1, for immediate viewing and/recording.

**Computer System**

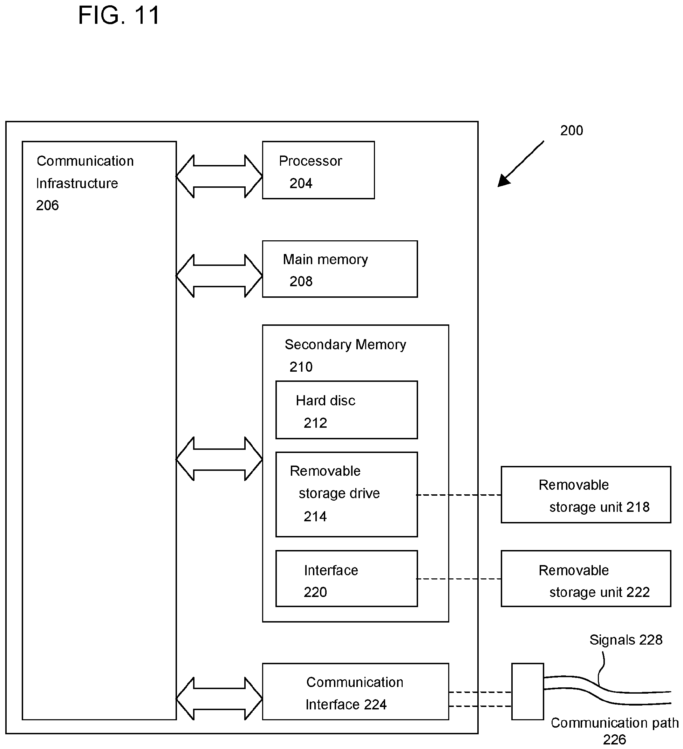

The entities and functional items described herein, such as the profile management function 11, consumption data processor 14 and/or scheduling function 8, may be implemented by computer systems such as computer system 200 as shown in Figure 11. Embodiments of the present invention may be implemented as programmable code for execution by such computer systems 200. After reading this description, it will become apparent to a person skilled in the art how to implement the invention using other computer systems and/or computer architectures.

Computer system 200 includes one or more processors, such as processor 204. Processor 204 may be any type of processor, including but not limited to a special purpose or a general-purpose digital signal processor. Processor 204 is connected to a communication infrastructure 206 (for example, a bus or network). Various software implementations are described in terms of this exemplary computer system. After reading this description, it will become apparent to a person skilled in the art how to implement the invention using other computer systems and/or computer architectures.

Computer system 200 also includes a main memory 208, preferably random access memory (RAM), and may also include a secondary memory 210. Secondary memory 210 may include, for example, a hard disk drive 212 and/or a removable storage drive 214, representing a floppy disk drive, a magnetic tape drive, an optical disk drive, etc. Removable storage drive 214 reads from and/or writes to a removable storage unit 218 in a well-known manner. Removable storage unit 218 represents a floppy disk, magnetic tape, optical disk, etc., which is read by and written to by removable storage drive 214. As will be appreciated, removable storage unit 218 includes a computer usable storage medium having stored therein computer software and/or data.

In alternative implementations, secondary memory 210 may include other similar means for allowing computer programs or other instructions to be loaded into computer system 200. Such means may include, for example, a removable storage unit 222 and an interface 220. Examples of such means may include a program cartridge and cartridge interface (such as that previously found in video game devices), a removable memory chip (such as an EPROM, or PROM, or flash memory) and associated socket, and other removable storage units 222 and interfaces 220 which allow software and data to be transferred from removable storage unit 222 to computer system 200. Alternatively, the program may be executed and/or the data accessed from the removable storage unit 222, using the processor 204 of the computer system 200.

Computer system 200 may also include a communication interface 224. Communication interface 224 allows software and data to be transferred between computer system 200 and external devices. Examples of communication interface 224 may include a modem, a network interface (such as an Ethernet card), a communication port, a Personal Computer Memory Card International Association (PCMCIA) slot and card, etc. Software and data transferred via communication interface 224 are in the form of signals 228, which may be electronic, electromagnetic, optical, or other signals capable of being received by communication interface 224. These signals 228 are provided to communication interface 224 via a communication path 226. Communication path 226 carries signals 228 and may be implemented using wire or cable, fibre optics, a phone line, a wireless link, a cellular phone link, a radio frequency link, or any other suitable communication channel. For instance, communication path 226 may be implemented using a combination of channels.

The terms "computer program medium" and "computer usable medium" are used generally to refer to media such as removable storage drive 214, a hard disk installed in hard disk drive 212, and signals 228. These computer program products are means for providing software to computer system 200. However, these terms may also include signals (such as electrical, optical or electromagnetic signals) that embody the computer program disclosed herein.

Computer programs (also called computer control logic) are stored in main memory 208 and/or secondary memory 210. Computer programs may also be received via communication interface 224. Such computer programs, when executed, enable computer system 200 to implement embodiments of the present invention as discussed herein. Accordingly, such computer programs represent controllers of computer system 200. Where the embodiment is implemented using software, the software may be stored in a computer program product and loaded into computer system 200 using removable storage drive 214, hard disk drive 212, or communication interface 224, to provide some examples.

Alternative embodiments may be implemented as control logic in hardware, firmware, or software or any combination thereof.

## Alternative Embodiments

Aspects of the invention are applicable to audio-only content, such as digital radio broadcasts, or a mixture of video and audio-only content.

Alternative embodiments may be envisaged, which nevertheless fall within the scope of the following claims.

## Claims

1. A method of identifying recommended media content items (C1...Cn) for a user associated with a local device (1) for displaying content to the user, the method comprising, at the local device (1):

   a. accessing media content item tokens (F1...Fn) for respective media content items (C1...Cn) available to the user, wherein the media content item tokens (F1...Fn) each comprise a plurality of media content item attributes (A1...A5) having corresponding attribute values;
   b. accessing a user preference token (Tn) relating to the user, the user preference token (Tn) comprising a plurality of user preference attributes each relating to a respective one of the media content item attributes, and each user preference attribute comprising a set of affinity values corresponding to at least some of the possible attribute values of the corresponding media content item attribute;
   c. for at least some of the attributes of each of the media content item tokens, identifying a corresponding affinity value of the corresponding user preference attribute;
   d. for each media item token, combining the identified affinity values of the attributes to generate on overall affinity value for the corresponding media item;
   e. identifying the recommended media content items based on the corresponding overall affinity values; and
   f. presenting or storing the recommended media content items for consumption by the user,

      wherein the media content item attributes (A1...A5) include at least one consumption attribute having a value relating to consumption of the corresponding media content item (Cn), and
      wherein the at least one consumption attribute value is determined by clustering different users into user clusters based on similar consumption of a plurality of media content items (C1... Cn) including said corresponding media content item, and determining the at least one consumption attribute value from the cluster or clusters having the highest number of users that have consumed the corresponding media content item.

2. The method of any preceding claim, wherein the media content item attributes (A1...A5) include at least one content attribute having a value relating to content of the corresponding media content item.

3. The method of claim 2, wherein the at least one content attribute value is determined by clustering the media content items (C1...Cn) based on associated content metadata.

4. The method of any preceding claim, wherein the media content item tokens (F1...Fn) and the user preference token (Tn) at the local device are periodically refreshed, and each of the media content item tokens (F1...Fn) and the user preference tokens (Tn) include a version identifier.

5. The method of claim 4, wherein mismatches are identified between version identifiers of the user preference token (Tn) and the media content item tokens (F1...Fn) and a current version of a corresponding token is requested if any mismatches are detected.

6. The method of any one of claims 1 to 5, wherein at least one of the attributes has a value manually set by a system operator.

7. Apparatus arranged to perform the method of any preceding claim.

8. A computer program product comprising program code means arranged to perform the method of any one of claims 1 to 6 when executed by a suitably arranged computer system.

**Patentansprüche**

1. Verfahren zum Identifizieren von empfohlenen Medieninhaltselementen (C1...Cn) für einen mit einem lokalen Gerät (1) assoziierten Benutzer, um dem Benutzer Inhalt anzuzeigen, wobei das Verfahren an dem lokalen Gerät (1) Folgendes beinhaltet:

   a. Zugreifen auf Medieninhaltselement-Token (F1...Fn) für jeweilige dem Benutzer zur Verfügung stehende Medieninhaltselemente (C1...Cn), wobei die Medieninhaltselement-Token (F1...Fn) jeweils mehrere Medieninhaltselementattribute (A1...A5) mit entsprechenden Attributwerten umfassen;
   b. Zugreifen auf ein Benutzerpräferenz-Token (Tn) in Bezug auf den Benutzer, wobei das Benutzerpräferenz-Token (Tn) mehrere Benutzerpräferenzattribute umfasst, die sich jeweils auf ein jeweiliges der Medieninhaltselementattribute beziehen, und jedes Benutzerpräferenzattribut einen Satz von Affinitätswerten umfasst, die mindestens einigen der möglichen Attributwerte des entsprechenden Medieninhaltelementattributs entsprechen;
   c. Identifizieren, für mindestens einige der Attribute jedes der Medieninhaltselement-Token, eines entsprechenden Affinitätswertes des entsprechenden Benutzerpräferenzattributs;
   d. Kombinieren, für jedes Medienelement-Token, der identifizierten Affinitätswerte der Attribute, um einen Gesamtaffinitätswert für das entsprechende Medienelement zu erzeugen;
   e. Identifizieren der empfohlenen Medieninhaltselemente auf der Basis der entsprechenden Gesamtaffinitätswerte; und
   f. Präsentieren oder Speichern der empfohlenen Medieninhaltselemente für den Konsum durch den Benutzer,

   wobei die Medieninhaltselementattribute (A1...A5) mindestens ein Konsumattribut mit einem Wert in Bezug auf den Konsum des entsprechenden Medieninhaltselements (Cn) enthalten, und
   wobei der mindestens eine Konsumattributwert durch Clustern verschiedener Benutzer in Benutzercluster auf der Basis eines ähnlichen Konsums einer Mehrzahl von Medieninhaltselementen (C1...Cn) einschließlich des genannten entsprechenden Medieninhaltselements und Bestimmen des mindestens einen Konsumattributwerts von den ein oder mehreren Clustern mit der höchsten Anzahl von Benutzern bestimmt wird, die das entsprechende Medieninhaltselement konsumiert haben.

2. Verfahren nach einem vorherigen Anspruch, wobei die Medieninhaltselementattribute (A1...A5) mindestens ein Inhaltsattribut mit einem Wert enthalten, der sich auf den Inhalt des entsprechenden Medieninhaltselements bezieht.

3. Verfahren nach Anspruch 2, wobei der mindestens eine Inhaltsattributwert durch Clustern der Medieninhaltselemente (C1...Cn) auf der Basis assoziierter Inhaltsmetadaten bestimmt wird.

4. Verfahren nach einem vorherigen Anspruch, wobei die Medieninhaltselement-Token (F1...Fn) und das Benutzerpräferenz-Token (Tn) an dem lokalen Gerät periodisch aufgefrischt werden und jedes der Medieninhaltselement-Token (F1...Fn) und der Benutzerpräferenz-Token (Tn) eine Versionskennung enthält.

**5.** Verfahren nach Anspruch 4, wobei Fehlübereinstimmungen zwischen Versionskennungen des Benutzerpräferenz-Tokens (Tn) und der Medieninhaltselement-Token (F1...Fn) identifiziert werden und eine aktuelle Version eines entsprechenden Tokens angefordert wird, wenn Fehlübereinstimmungen erkannt werden.

**6.** Verfahren nach einem der Ansprüche 1 bis 5, wobei mindestens eines der Attribute einen von einem Systembetreiber manuell eingestellten Wert hat.

**7.** Vorrichtung zur Durchführung des Verfahrens nach einem vorherigen Anspruch.

**8.** Computerprogrammprodukt, das Programmcodemittel umfasst, ausgelegt zum Durchführen des Verfahrens nach einem der Ansprüche 1 bis 6 bei Ausführung durch ein geeignet ausgelegtes Computersystem.

**Revendications**

**1.** Un procédé d'identification d'éléments de contenu multimédia recommandés (C1...Cn) pour un utilisateur associé à un dispositif local (1) destiné à l'affichage d'un contenu à l'utilisateur, le procédé comprenant, au niveau du dispositif local (1) :

   a. l'accès à des jetons d'éléments de contenu multimédia (F1...Fn) pour des éléments de contenu multimédia respectifs (C1...Cn) à la disposition de l'utilisateur, où les jetons d'éléments de contenu multimédia (F1...Fn) comprennent chacun une pluralité d'attributs d'éléments de contenu multimédia (A1...A5) possédant des valeurs d'attribut correspondantes,
   b. l'accès à un jeton de préférences d'utilisateur (Tn) relatif à l'utilisateur, le jeton de préférences d'utilisateur (Tn) comprenant une pluralité d'attributs de préférences d'utilisateur, chacun d'eux portant sur un attribut respectif des attributs d'éléments de contenu multimédia, et chaque attribut de préférences d'utilisateur comprenant un ensemble de valeurs d'affinité correspondant à au moins certaines des valeurs d'attribut possibles de l'attribut d'éléments de contenu multimédia correspondant,
   c. pour au moins certains des attributs de chacun des jetons d'éléments de contenu multimédia, l'identification d'une valeur d'affinité correspondante de l'attribut de préférences d'utilisateur correspondant,
   d. pour chaque jeton d'élément multimédia, la combinaison des valeurs d'affinité identifiées des attributs de façon à générer une valeur d'affinité globale pour l'élément multimédia correspondant,
   e. l'identification des éléments de contenu multimédia recommandés en fonction des valeurs d'affinité globales correspondantes, et
   f. la présentation ou la conservation en mémoire des éléments de contenu multimédia recommandés en vue d'une consommation par l'utilisateur, où les attributs d'éléments de contenu multimédia (A1...A5) comprennent au moins un attribut de consommation possédant une valeur relative à une consommation de l'élément de contenu multimédia correspondant (Cn), et où la au moins une valeur d'attribut de consommation est déterminée par le regroupement de différents utilisateurs en groupes d'utilisateurs en fonction d'une consommation similaire d'une pluralité d'éléments de contenu multimédia (C1...Cn) comprenant ledit élément de contenu multimédia correspondant, et la détermination de la au moins une valeur d'attribut de consommation à partir du groupe ou des groupes possédant le nombre le plus élevé d'utilisateurs qui ont consommé l'élément de contenu multimédia correspondant.

**2.** Le procédé selon l'une quelconque des Revendications précédentes, où les attributs d'éléments de contenu multimédia (A1...A5) comprennent au moins un attribut de contenu possédant une valeur relative à un contenu de l'élément de contenu multimédia correspondant.

**3.** Le procédé selon la Revendication 2, où la au moins une valeur d'attribut de contenu est déterminée par le regroupement des éléments de contenu multimédia (C1...Cn) en fonction de métadonnées de contenu associées.

**4.** Le procédé selon l'une quelconque des Revendications précédentes, où les jetons d'éléments de contenu multimédia (F1...Fn) et le jeton de préférences d'utilisateur (Tn) au niveau du dispositif local sont rafraîchis périodiquement, et chacun des jetons d'éléments de contenu multimédia (F1...Fn) et des jetons de préférence d'utilisateurs (Tn) comprend un identifiant de version.

**5.** Le procédé selon la Revendication 4, où des non-concordances sont identifiées entre des identifiants de version du jeton de préférences d'utilisateur (Tn) et des jetons d'éléments de contenu multimédia (F1...Fn), et une version actuelle d'un jeton correspondant est demandée si des non-concordances quelconques sont détectées.

6. Le procédé selon l'une quelconque des Revendications 1 à 5, où au moins un des attributs possède une valeur réglée manuellement par un opérateur système.

7. Un appareil agencé de façon à exécuter le procédé selon l'une quelconque des Revendications précédentes.

8. Un produit de programme informatique contenant un moyen de code de programme agencé de façon à exécuter le procédé selon l'une quelconque des Revendications 1 à 6 lorsqu'il est exécuté par un système informatique agencé de manière appropriée.

## FIG. 1

# FIG. 2

# FIG. 3

**F1**

| A1 | A2 | A3 | A4 | A5 |
|----|----|----|----|----|
| C | B | B | E | A |

Affinity = 6
(2+1+0+1+2)

**F2**

| A1 | A2 | A3 | A4 | A5 |
|----|----|----|----|----|
| A | A | E | B | A |

Affinity = 8
(0+1+4+1+2)

**T1**

|   | A1 | A2 | A3 | A4 | A5 |
|---|----|----|----|----|----|
| A | 0 | 1 | 0 | 0 | 2 |
| B | 0 | 1 | 0 | 1 | 0 |
| C | 2 | 2 | 0 | 0 | 2 |
| D | 4 | X | 0 | 1 | 3 |
| E | 1 | X | 4 | 1 | 0 |
| F | 0 | X | X | 0 | X |
| G | X | X | X | 1 | X |

X = No value

## FIG. 4

Start

S1
Define Flavour tokens F1...n for available content items C1..Cn

S2
Define Taste tokens T1...n for users U1..Un

S3
For relevant user(s) Un, calculate affinity between Taste token(s) Tn and Flavour tokens of available content items C1...Cn

S4
Present recommended content items Cn to relevant user based on affinities

S5
Receive selection(s) of content item(s)

S6
Output/record selected content items(s)

S7
Update?

Y

N

End

FIG. 5

| STUDIO = Z | STUDIO = Y | STUDIO = X | STUDIO = W | STUDIO = V |
|---|---|---|---|---|
| C1 | C2 | C3 | C4 | C5 |
| C6 | C7 | C8 | C9 | C10 |
| C11 | C12 | C13 | C14 |
| | C15 | | | |

EP 3 427 482 B1

## FIG. 6

A1

A

B

C

STUDIO = Z
STUDIO = X

STUDIO = Y

STUDIO = W
STUDIO = V

C1        C8

C2

C4        C10

C6

C7

C9        C14

C11

C12

C13

C3

C15

C5

EP 3 427 482 B1

# FIG. 7

| ACTOR = Z | ACTOR = Y | ACTOR = X | ACTOR = W | ACTOR = V |
|-----------|-----------|-----------|-----------|-----------|
| C1  C2 | C2 | C3 | C4 | C5  C7 |
| C6 | C6 | C8 | C9 | C10 |
| C11 | C12 | C2 | C13 | C14 |
| C9 | C15 | C6 | C6 | C4 |

EP 3 427 482 B1

# FIG. 8

A2

A

B

C

**ACTOR = Z**
**ACTOR = Y**

**ACTOR = X**
**ACTOR = V**

**ACTOR = W**

| | |
|---|---|
| C1 | C2 |
| C6 | C9 |
| C11 | C12 |
| C15 | |

| | |
|---|---|
| C2 | C3 |
| C4 | C5 |
| C6 | C7 |
| C8 | C10 |
| C14 | |

| | |
|---|---|
| C4 | C6 |
| C9 | C13 |

EP 3 427 482 B1

# FIG. 9

Users U1...Un

Pool A          Pool B          Pool C          Pool D

C1          C2          C3

# FIG. 10

EP 3 427 482 B1

# FIG. 11

200

Communication Infrastructure 206

Processor 204

Main memory 208

Secondary Memory 210

Hard disc 212

Removable storage drive 214

Interface 220

Removable storage unit 218

Removable storage unit 222

Communication Interface 224

Signals 228

Communication path 226

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2438645 A
- WO 2014159467 A1
- US 2009222430 A1
- US 20040003403 A1